# EUROPÄISCHE PATENTSCHRIFT

(11) **EP 4 802 318 B1**
(45) Veröffentlichungstag und Bekanntmachung des Hinweises auf die Patenterteilung: **14.10.2026**
(21) Anmeldenummer: 24833895.6
(22) Anmeldetag: 13.12.2024
(51) Int. Cl.: G02B 21/00, G01N 21/64, G02B 27/58

(54) **VERFAHREN, VORRICHTUNG, LICHTMIKROSKOP UND COMPUTERPROGRAMM ZUR LOKALISIERUNG ODER ZUM VERFOLGEN VON EMITTERN IN EINER PROBE**
METHOD, DEVICE, LIGHT MICROSCOPE AND COMPUTER PROGRAM FOR LOCATING OR TRACKING EMITTERS IN A SAMPLE
PROCÉDÉ, DISPOSITIF, MICROSCOPE OPTIQUE ET PROGRAMME INFORMATIQUE POUR LOCALISER OU SUIVRE DES ÉMETTEURS DANS UN ÉCHANTILLON

(30) Priorität: 15.12.2023 DE 102023135409
(43) Veröffentlichungstag der Anmeldung: 09.09.2026
(73) Patentinhaber: Abberior Instruments GmbH, 37077 Göttingen (DE)
(72) Erfinder: MOLIÈRE, Noël, 31655 Stadthagen (DE); KASTRUP, Lars, 37073 Göttingen (DE)
(86) Internationale Anmeldenummer: PCT/EP2024/086310
(87) Internationale Veröffentlichungsnummer: WO 2025/125609

(56) Entgegenhaltungen:
- EP-A1- 4 067 878
- WO-A1-2023/006176
- US-A1- 2023 003 651
- US-A1- 2023 251 479
- US-A1- 2023 350 179

## Beschreibung

### Technisches Gebiet der Erfindung

Die Erfindung betrifft ein Verfahren zur Lokalisierung oder zum Verfolgen von Emittern in einer Probe, insbesondere ein MINFLUX-Verfahren, eine Vorrichtung mit einer Recheneinheit zur Durchführung des Verfahrens, ein Lichtmikroskop, insbesondere ein MINFLUX-Mikroskop, zur Lokalisierung oder zum Verfolgen von Emittern in einer Probe und ein Computerprogramm, das die Vorrichtung und/oder das Lichtmikroskop dazu veranlasst, das erfindungsgemäße Verfahren durchzuführen.

### Stand der Technik

Bei lichtmikroskopischen Lokalisierungsverfahren werden im Gegensatz zu klassischen abbildenden Verfahren der Lichtmikroskopie Positionen einzelner Emitter (z.B. Fluorophore oder mit Fluorophoren markierte Moleküle) auf Basis von erfassten Lichtemissionen berechnet, wobei aus den üblicherweise nacheinander bestimmten Positionen einer Vielzahl von Emittern eine Lokalisationskarte erstellt werden kann, welche die Verteilung der Emitter in der Probe visualisiert. Eine solche Lokalisationskarte ähnelt einem Bild der Probe, das eine Auflösung deutlich unterhalb der Beugungsgrenze haben kann, also "superaufgelöst" ist.

Mit dem Begriff "einzeln" ist hier gemeint, dass zu einem bestimmten Zeitpunkt Licht emittierende Emitter, deren Emissionslicht nicht unterscheidbar ist, einen Abstand oberhalb der Beugungsgrenze aufweisen, so dass deren Emissionslicht trennbar ist. Dies kann z.B. bei permanent Licht emittierenden Emittern durch eine Markierungsdichte der Probe unterhalb eines Grenzwerts erreicht werden. Wenn die Emitter z.B. asynchron blinken, kann jedoch ein ausreichender Abstand zu jedem gegebenen Zeitpunkt auch bei einer höheren Markierungsdichte erreicht werden. Hierzu kann insbesondere die Probenumgebung (z.B. Puffer, Einbettungsmedium) chemisch so konfiguriert werden, dass eine gewünschte Blinkrate resultiert. Geringere Abstände können auch dann tolerierbar sein, wenn unterschiedliche Arten von Emittern vorliegen, deren Emissionslicht optisch trennbar ist, z.B. durch unterschiedliche Emissionsspektren oder Emissionslebensdauern. Schließlich kann es in Ausnahmefällen durch spezielle Auswertemethoden (z.B. statistische oder zeitaufgelöste Methoden) auch möglich sein, Gruppen von mehreren nah benachbarten Emittern gemeinsam zu lokalisieren. Dabei kann für jeden Emitter eine jeweilige Position bestimmt werden oder es kann eine mittlere Position mehrerer Emitter ermittelt werden.

Einzelne sich in der Probe bewegende Emitter können durch mehrere schnell aufeinanderfolgende Lokalisationen in der Probe verfolgt werden (Verfolgen bzw. Tracking). Die entsprechenden Messdaten können z.B. in Form einer Trajektorie dargestellt werden.

Bei der sogenannten MINFLUX-Technik wird eine einzelne Emitter (z.B. einzelne Fluorophore oder mit Fluorophoren markierte Moleküle oder lichtstreuende Partikel) aufweisende Probe an Beleuchtungspositionen in einem Bereich um eine grob geschätzte Position eines einzelnen Emitters mit einer Intensitätsverteilung von Anregungslicht beleuchtet, wobei die Intensitätsverteilung ein, insbesondere zentrales, Intensitätsminimum (idealerweise eine Intensitätsnullstelle) aufweist. Für jede Beleuchtungsposition werden die Lichtemissionen (insbesondere Photonenraten) des einzelnen Emitters erfasst. Anschließend wird aus den Lichtemissionen und den zugehörigen Beleuchtungspositionen eine neue Positionsschätzung des Emitters berechnet. Bei der Intensitätsverteilung kann es sich z.B. um einen sogenannten 2D-Donut, einen sogenannten *bottle beam,* oder eine Überlagerung dieser Lichtverteilungen handeln, welche aus dem Bereich der STED-Mikroskopie bekannt sind.

Verschiedene Varianten der MINFLUX-Technik sind beispielsweise in den Publikationen F. Balzarotti et al. (2017) Nanometer resolution imaging and tracking of fluorescent molecules with minimal photon fluxes, Science 355 (6325), 606-612, K. C. Gwosch et al. (2020) MINFLUX nanoscopy delivers 3D multicolor nanometer resolution in cells, Nat. Methods, 17 (2), 217-224 und R. Schmidt et al. (2021) MINFLUX nanometer-scale 3D imaging and microsecond-range tracking on a common fluorescence microscope, Nat. Commun. 12 (1), 1478 sowie in den Patentdokumenten US 9,719,928 B1, US 10,900,901 B2, US 10,908,089 B2 und US 10,962,479 B2 beschrieben.

Mit der MINFLUX-Technik lassen sich aufgrund der verwendeten Anregungslichtverteilung mit Intensitätsminimum Lokalisationspräzisionen im einstelligen Nanometerbereich mit einer etwa im Vergleich zur sogenannten PALM/STORM-Technik deutlich geringeren Anzahl von emittierten Photonen erreichen. Dies ist hauptsächlich dadurch zu erklären, dass der Emitter mit umso weniger Anregungslicht beleuchtet wird, je dichter sich das Minimum der Anregungslichtverteilung an der tatsächlichen Emitterposition befindet.

In der Patentveröffentlichung US 11,255,791 B2 ist unter anderem eine Variante der MINFLUX-Technik beschrieben, bei der die Probe mit einer Kombination einer Anregungslichtverteilung mit lokalem Maximum und einer STED (*stimulated emission depletion*)-Lichtverteilung mit lokalem Minimum beleuchtet wird. Die Position eines einzelnen Emitters wird ebenfalls aus den für verschiedene Beleuchtungspositionen erfassten Lichtemissionen berechnet, es wird jedoch umso mehr Licht emittiert, je dichter das Minimum der STED-Lichtverteilung (und das mit dem Minimum überlagerte Maximum der Anregungslichtverteilung) an der tatsächlichen Emitterposition liegt. Daher ergibt sich hier nicht der Vorteil der besonders hohen Photoneneffizienz.

Eine spezielle Lokalisationstechnik unter Verwendung einer Anregungslichtverteilung mit lokalem Maximum und einer STED-Lichtverteilung mit lokalem Minimum ist in der Publikation M. Weber et al. (2021) MINSTED fluorescence localization and nanoscopy, Nat. Photonics 15, 361-366 und der Patentanmeldung US 2024/0183783 A1 beschrieben und unter der Bezeichnung MINSTED bekannt. Dabei wird die Kombination der Anregungslichtverteilung und der STED-Lichtverteilung auf einer kontinuierlichen Bahn um eine geschätzte Emitterposition bewegt und die Bahn wird auf Basis des erfassten Photons angepasst. Dabei kann zusätzlich die Anregungs- und STED-Intensität erhöht werden.

In der internationalen Patentveröffentlichung US 2023/0175886 A1 ist ein Verfahren für die konventionelle abbildende Lichtmikroskopie beschrieben, bei denen Lichtemissionen, z.B. Fluoreszenzemissionen aus einer Probe mit einem Detektor erfasst werden, der in der Lage ist, einzelne Photonen zu erfassen. Abhängig von der zeitlichen Folge der Photonen, die auf den Detektor treffen, kann es zu Mehrphotonenereignissen kommen, d.h. die kurz aufeinander folgenden Photonen können nicht als einzelne Signalpulse aufgelöst werden, sondern erzeugen einen einzigen breiteren Signalpuls des Detektors. Gegenstand der US 2023/0175886 A1 ist ein Auswerteverfahren, das unter Bestimmung der Breite der Signalpulsform solche Mehrphotonenereignisse zählt, um die dynamische Reichweite des Detektors und somit die Bildqualität sowie eine optionale Fluoreszenzlebenszeitanalyse zu verbessern.

Bei Lokalisations- und Verfolgungsverfahren für einzelne Emitter, wie z.B. MINFLUX-Verfahren, nach dem Stand der Technik werden die Lichtemissionen der Emitter meist mit Avalanche-Photodioden erfasst. Diese Detektoren weisen eine Totzeit auf, d.h. nach Erfassung eines einzelnen Photons benötigt der Detektor bzw. die mit dem Detektor gekoppelte Elektronik eine gewisse Zeit, bis das nächste Photon detektiert werden kann. Während dieser Totzeit ist der Detektor "blind" für weitere eintreffende Photonen.

Ein weiteres Verfahren ist aus der US 2023/251479 A1 bekannt.

Es wäre jedoch wünschenswert, alle eintreffenden Photonen für die Positionsschätzung eines einzelnen Emitters nutzen zu können, um den Emitter mit möglichst wenigen Photonen möglichst genau und möglichst schnell zu lokalisieren.

### Aufgabe der Erfindung

Hieraus ergibt sich die Aufgabe ein Verfahren zur Lokalisation oder zum Verfolgen von Emittern in einer Probe zur Verfügung zu stellen, welches hinsichtlich seiner Photoneneffizienz, seiner Positionsgenauigkeit und seiner Messzeit verbessert ist.

### Lösung

Diese Aufgabe wird durch den Gegenstand der unabhängigen Ansprüche gelöst. Vorteilhafte Weiterbildungen der Erfindung sind in den Unteransprüchen angegeben und werden im Folgenden beschrieben.

### Beschreibung der Erfindung

Ein erster Aspekt der Erfindung betrifft ein Verfahren zur Lokalisierung oder zum Verfolgen von Emittern in einer Probe, insbesondere ein MINFLUX-Verfahren, wobei die Probe mit einer Intensitätsverteilung eines Beleuchtungslichts mit einem lokalen Minimum beleuchtet wird, wobei das Beleuchtungslicht Emitter in der Probe zur Emission von Photonen anregt oder die Emission von Photonen durch Emitter in der Probe moduliert.

Bei dem Verfahren werden mit einem Detektor Detektionsereignisse registriert, wobei die Detektionsereignisse jeweils ein von einem Emitter in der Probe emittiertes Photon oder mehrere von einem Emitter in der Probe emittierte Photonen anzeigen, wobei den Detektionsereignissen auf Basis einer Analyse einer Signalpulsform des jeweiligen Detektionsereignisses Gewichte zugeordnet werden, und wobei auf Basis der gewichteten Detektionsereignisse eine Position des Emitters in der Probe geschätzt wird.

Ein Verfahren zur Lokalisierung von Emittern im Sinne der vorliegenden Spezifikation zeichnet sich dadurch aus, dass die Positionen einzelner Emitter rechnerisch auf Basis von erfassten Lichtemissionen geschätzt werden. Dies unterscheidet solche Verfahren von klassischen lichtmikroskopischen Bildgebungsverfahren, wie Weitfeld- oder Rastermikroskopie, bei denen eine optische Abbildung einer Vielzahl von Emittern erfolgt, ohne die Positionen der einzelnen Emitter zu kennen.

Im Kontext der vorliegenden Spezifikation ist ein Verfahren zum Verfolgen von Emittern ein Verfahren, das die Position eines sich bewegenden einzelnen Emitters über die Zeit verfolgt. Hierunter fallen z.B. sogenannte Einzelmolekül-Tracking-Methoden. Dabei wird insbesondere eine Trajektorie des Emitters aufgenommen, d.h. eine Spur, welche zeitlich aufeinanderfolgende Lokalisationen des Emitters verbindet.

Unter Emittern werden in dieser Anmeldung Objekte verstanden, die, wenn sie mit Anregungslicht beleuchtet werden, mit Blick auf die erfindungsgemäßen Messungen als Punktlichtquellen betrachtet werden können. Das von dem Objekt, das als Punktlichtquelle wirkt, ausgehende Licht kann beispielsweise Streulicht sein, das aus einer elastischen Streuung wie beispielsweise einer Rayleigh-Streuung oder einer unelastischen Streuung wie beispielsweise einer Raman-Streuung resultiert oder es kann Lumineszenzlicht, insbesondere Fluoreszenzlicht, sein. Ein Emitter kann also z.B. ein lichtreflektierendes Nanopartikel, ein *Quantum Dot,* ein fluoreszierendes Farbstoffmolekül (Fluorophor) oder ein mit einem oder mehreren Fluoreszenzfarbstoffmolekülen markiertes Molekül oder Nanopartikel sein. Je nach Größe des Moleküls und Abstand der Fluorophore kann ein mit mehreren Fluorophoren markiertes Molekül oder ein mit mehreren Fluorophoren markiertes Nanopartikel selbstverständlich auch mehrere Emitter im Sinne der hier verwendeten Definition aufweisen.

Als "einzelne" Emitter werden im Kontext der vorliegenden Spezifikation Emitter verstanden, die mit Verfahren der Lichtmikroskopie optisch voneinander trennbar sind. Dies kann durch eine Markierungsdichte der Probe erreicht werden, die in einem mittleren Abstand der Emitter oberhalb der Beugungsgrenze resultiert. Alternativ können auch asynchron blinkende Emitter verwendet werden, wenn die Probenbedingungen (insbesondere Zusammensetzung des Probenpuffers und Einbettungsmediums) so eingestellt sind, dass die mittleren Abstände der jeweils Licht emittierenden Emitter zu jedem Zeitpunkt oberhalb der Beugungsgrenze liegen. Schließlich können anderweitig optisch unterscheidbare unterschiedliche Emitter unter Umständen auch getrennt werden, wenn sie einen Abstand unterhalb der Beugungsgrenze aufweisen, z.B. anhand ihres charakteristischen Emissionsspektrums oder ihrer Emissionslebensdauer. Optional kann ein räumlich begrenzter Bereich der Probe mit Aktivierungslicht beleuchtet werden, um Emitter in diesem Bereich aus einem inaktiven Zustand, in dem die Emitter bei Bestrahlung mit Anregungslicht kein Licht emittieren, in einen aktiven Zustand, in dem die Emitter bei Bestrahlung mit Anregungslicht Licht emittieren, zu überführen.

Bei dem Beleuchtungslicht kann es sich insbesondere um Anregungslicht handeln, das einen Emitter in der Probe zur Lichtemission anregt, also eine Lichtemission des Emitters induziert. Bei den Lichtemissionen kann es sich dabei insbesondere um reflektiertes Licht, Streulicht oder Lumineszenzlicht (z.B. Fluoreszenzlicht) handeln. Alternativ kann das Beleuchtungslicht auch Lichtemissionen des Emitters modulieren. In diesem Fall kann es sich bei dem Beleuchtungslicht z.B. um STED-Licht, das eine Abregung von Emittern aus einem angeregten Zustand in den Grundzustand verursacht, oder um Schaltlicht, das Emitter aus einem aktiv emittierenden Zustand in einen Dunkelzustand überführt, handeln.

Die Probe wird mit einer Intensitätsverteilung des Beleuchtungslichts beleuchtet, welches in der Probe eine Intensitätsverteilung mit einem lokalen Minimum ausbildet. An das lokale Minimum grenzen insbesondere in mindestens einer Raumrichtung Intensitätsanstiegsbereiche an. Das lokale Minimum kann insbesondere ein zentrales Minimum der Intensitätsverteilung sein, also ein Zentrum der Intensitätsverteilung bilden, wobei das Zentrum insbesondere am geometrischen Fokus angeordnet sein kann. In diesem Fall kann es sich also insbesondere um eine bezüglich des geometrischen Fokus punktsymmetrische Lichtverteilung handeln. Das lokale Minimum kann insbesondere zumindest näherungsweise eine Intensitätsnullstelle sein. Zu derartigen Intensitätsverteilungen gehören insbesondere ein sogenannter Donut, ein sogenannter *bottle beam* und eine sogenannte Halbmond-Lichtverteilung mit zwei Bereichen hoher Intensität, die durch eine Fläche minimaler Intensität getrennt sind. Solche Lichtverteilungen lassen sich z.B. durch Phasenmodulation des Beleuchtungslichts (etwa mit einer Phasenplatte oder einem *spatial light modulator*) oder z.B. unter Verwendung eines biaxialen Kristalls in Kombination mit Polarisationsschaltelementen und Fokussierung mittels einer Objektivlinse in die Probe erzeugen.

Bei dem erfindungsgemäßen Lokalisations- bzw. Verfolgungsverfahren kann es sich insbesondere um ein sogenanntes MINFLUX-Verfahren handeln (wenn das Beleuchtungslicht, mit dem die Probe in dem Lokalisationsschritt beleuchtet wird, Anregungslicht ist, das die Lichtemissionen der Emitter induziert) oder um ein STED-MINFLUX-Verfahren (wenn das Beleuchtungslicht, mit dem die Probe in dem Lokalisationsschritt beleuchtet wird, Verhinderungslicht ist, das die Lichtemissionen der Emitter moduliert). Bei einem MINFLUX-Verfahren oder STED-MINFLUX-Verfahren wird das lokale Minimum der Intensitätsverteilung des Beleuchtungslichts an Beleuchtungspositionen in einem Nahbereich der ungefähren Position eines einzelnen Emitters platziert und für jede Beleuchtungsposition werden von dem Emitter emittierte Photonen erfasst. Der Nahbereich kann insbesondere eine Erstreckung in der Größenordnung der optischen Beugungsgrenze haben. Die erfassten Photonenzahlen und die zugehörigen Beleuchtungspositionen können Eingangswerte eines Positionsschätzers (z.B. eines *least means square*-Schätzers oder eines *maximum likelihood*-Schätzers) bilden, mit welchem dann eine Positionsschätzung für den Emitter bestimmt wird. Dieser Vorgang kann iterativ wiederholt werden, indem die Intensitätsverteilung des Beleuchtungslichts an aktualisierten Beleuchtungspositionen in einem Nahbereich der aktualisierten Positionsschätzung platziert wird und wiederum Photonen für jede Position erfasst werden. Hierbei kann insbesondere ein Radius eines von den Beleuchtungspositionen gebildeten Beleuchtungsmusters um die zuvor geschätzte Position reduziert werden. Dabei kann optional zusätzlich die Lichtintensität des Beleuchtungslichts erhöht werden. Die Iterationsschritte können z.B. weitergeführt werden, bis der Emitter aufhört Licht zu emittieren oder bis ein Photonenlimit oder ein Schwellwert der Lokalisierungspräzision erreicht ist. Bei einem MINFLUX- oder STED-MINFLUX-Verfolgungsverfahren (Tracking-Verfahren) können insbesondere eine Iteration oder mehrere Iterationen in kurzen Zeitabständen wiederholt werden, um die Bahn eines sich bewegenden Emitters zu verfolgen. Dabei können insbesondere speziell auf ein Verfolgungsverfahren abgestimmte Beleuchtungsmuster verwendet werden.

Unter einem Detektionsereignis wird im Kontext der vorliegenden Spezifikation das Auftreffen eines oder mehrerer Photonen auf den Detektor verstanden, das zu einem einzigen Signalpuls des Detektors führt. Dieser Signalpuls kann abhängig von der Anzahl der zu dem Detektionsereignis gehörenden Photonen unterschiedliche Signalpulsformen, insbesondere unterschiedliche Pulsbreiten und/oder Pulsflächen aufweisen.

Eine Signalpulsform ist im Kontext der vorliegenden Spezifikation ein zeitlicher Verlauf einer Signalintensität eines Signalpulses des Detektors, der aufgrund der Erfassung eines oder mehrerer Photonen von dem Detektor entsteht.

Das einem Detektionsereignis zugewiesene Gewicht kann insbesondere davon abhängig sein, wie viele Photonen dem Detektionsereignis zugeordnet sind. Beispielsweise kann einem Detektionsereignis, das der Erfassung von zwei Photonen entspricht, das doppelte Gewicht zugeordnet werden wie einem Detektionsereignis, das die Detektion eines einzelnen Photons anzeigt. Bei den Gewichten kann es sich insbesondere um ganze, rationale und/oder reelle Zahlen handeln, die insbesondere den Verhältnissen von Photonen entsprechen, die durch die Detektionsereignisse angezeigt werden.

Durch die gewichteten Detektionsereignisse entsprechen die in dem Positionsschätzer berücksichtigten Photonen vorteilhafterweise besser der tatsächlichen Anzahl von auf dem Detektor eintreffenden Photonen als bei Verfahren nach dem Stand der Technik. Dadurch ist die Positionsschätzung genauer und ggf. (insbesondere bei iterativen MINFLUX-Verfahren) schneller, da tendenziell in früheren Iterationen eine Annäherung an die tatsächliche Position des Emitters erfolgt.

Aufgrund der Möglichkeit, mit dem erfindungsgemäßen Verfahren statt Avalanche-Fotodioden andere Detektoren (z.B. Hybridfotodetektoren) für die Einzelphotonenzählung in der Lokalisationsmikroskopie zu nutzen, die im Wesentlichen keine Totzeit aufweisen, kann vorteilhafterweise auch die (bei MINFLUX-Verfahren ohnehin hohe) Photoneneffizienz noch weiter gesteigert werden.

Die erfindungsgemäße Gewichtung der Detektionsereignisse ist etwas grundsätzlich anderes als die in Verfahren nach dem Stand der Technik zu bestimmten MINFLUX-Verfahren verwendete gewichtete Vektoraddition der Beleuchtungspositionen, an denen das Minimum der Intensitätsverteilung platziert wird. Bei dieser Vektoraddition wird ein Schätzer verwendet, bei dem die Vektoren der Beleuchtungspositionen mit den an den entsprechenden Positionen in einem Beobachtungszeitraum erfassten Photonenzahlen gewichtet werden. Wenn ein solcher Schätzer optional in dem erfindungsgemäßen Verfahren verwendet wird, stellt die erfindungsgemäße Gewichtung hierzu einen vorgelagerten Schritt dar. In diesem Fall können zunächst den Detektionsereignissen eines Detektors, bei dem die Erfassung mehrerer Einzelphotonen zeitlich überlappen kann, erste Gewichte zugeordnet werden, die z.B. umso größer sein können, je breiter der entsprechende Signalpuls ist. In einem zweiten Schritt kann dann z.B. eine mit zweiten Gewichten gewichtete Vektoraddition der Beleuchtungspositionen durchgeführt werden, wobei die zweiten Gewichte jeweiligen Summen der in einem jeweiligen Detektionszeitraum erfassten mit den ersten Gewichten gewichteten Detektionsereignissen entsprechen. Mit anderen Worten, die mit den ersten Gewichten gewichteten Detektionsereignisse können die Photonenzahlen in dem aus dem Stand der Technik bekannten Positionsschätzer auf Basis einer Vektorsumme ersetzen. Die Länge des Detektionszeitraums ist dabei insbesondere ein Vielfaches der Länge der Signalpulse. Insbesondere treten in dem Detektionszeitraum viele Detektionsereignisse auf.

Gemäß einer Ausführungsform wird die Position des Emitters in der Probe auf Basis der gewichteten Detektionsereignisse und den Detektionsereignissen zugeordneten Positionen des Minimums der Intensitätsverteilung geschätzt. Dabei kann die Intensitätsverteilung des Beleuchtungslichts z.B. mit einem Strahlscanner (z.B. mit elektrooptischen Deflektoren oder Galvoscannern) in einem Bereich um eine vorab geschätzte Position eines einzelnen Emitters verlagert werden. Aus dem Stand der Technik bekannte Ausführungsformen sind z.B. die schrittweise Verlagerung der Intensitätsverteilung auf einem Beleuchtungsmuster aus drei bis sechs Positionen, die auf einem Kreis um die vorab geschätzte Position liegen, mittels elektrooptischer Deflektoren (siehe z.B. Balzarotti et al. (2017) Nanometer resolution imaging and tracking of fluorescent molecules with minimal photon fluxes, Science 355 (6325), 606-612, K. C. Gwosch et al. (2020) MINFLUX nanoscopy delivers 3D multicolor nanometer resolution in cells, Nat. Methods, 17 (2), 217-224 und R. Schmidt et al. (2021) MINFLUX nanometer-scale 3D imaging and microsecond-range tracking on a common fluorescence microscope, Nat. Commun. 12 (1), 1478) oder eine kontinuierliche Kreisbewegung der Intensitätsverteilung um die vorab geschätzte Position (siehe z.B. US 2023/0008453 A1). In den Positionsschätzer können dann Wertepaare aus Positionsvektoren der Beleuchtungspositionen und entsprechenden an den Beleuchtungspositionen gemessenen Photonenzahlen eingesetzt werden. Beim Abfahren einer kontinuierlichen Bahn können statt der Positionsvektoren der vorab bekannten Beleuchtungspositionen die Positionsvektoren von Positionen auf der Bahn verwendet werden, an der sich das lokale Minimum der Intensitätsverteilung bei einem bestimmten Detektionsereignis gerade befunden hat. Diese Position kann z.B. aus Steuerdaten des Strahlscanners oder aus einer Messung mittels eines Positionssensors abgeleitet werden. Alternativ kann während des Abfahrens der kontinuierlichen Bahn wie z.B. in US 2023/0008453 A1 beschrieben eine zeitliche Modulation des Lichtemissionssignals analysiert werden, um die Position des Emitters zu schätzen.

Gemäß einer weiteren Ausführungsform wird die Position des Emitters in der Probe auf Basis der gewichteten Detektionsereignisse und den Detektionsereignissen zugeordneten Formen und/oder Ausrichtungen der Intensitätsverteilung geschätzt. Bei der Beleuchtung der Probe mit dem Beleuchtungslicht kann statt einer Verlagerung der Intensitätsverteilung (s.o.) oder zusätzlich dazu die Form und/oder Ausrichtung der Intensitätsverteilung so angepasst werden, dass ein zu lokalisierender oder zu verfolgender Emitter in der Probe abhängig von seiner (vorab nicht oder nur ungenau bekannten) tatsächlichen Position in der Probe mit unterschiedlichen Intensitäten des Beleuchtungslichts beaufschlagt wird. Konkret kann hierbei z.B. eine Intensitätsverteilung mit zwei gegenüberliegenden Intensitätsmaxima, die durch ein den geometrischen Fokus schneidendes flächig ausgebildetes Intensitätsminimum (insbesondere eine Nullfläche der Intensität) getrennt sind, um den geometrischen Fokus gedreht werden, insbesondere ohne den geometrischen Fokus gegenüber der Probe zu verlagern, um den Emitter je nach seiner Lage unterschiedlichen Beleuchtungsintensitäten auszusetzen. Solche Intensitätsverteilungen lassen sich z.B. durch Phasenmodulation des Beleuchtungslichtstrahls mit einem Phasenmuster erreichen, das einen linearen Phasensprung aufweist oder alternativ mit einem biaxialen Kristall und Polarisations-Schaltelementen. Das Umschalten der Intensitätsverteilung zum Verändern der Form und/oder Ausrichtung lässt sich z.B. mit einem steuerbaren Lichtmodulator (SLM) oder elektrooptischen Elementen realisieren. Für jede Form und/oder Ausrichtung der Intensitätsverteilung werden die Lichtemissionen des Emitters erfasst. Auf dieser Basis wird die Position des Emitters in der Probe geschätzt. Ein entsprechendes Verfahren ist z.B. in der US 2023/0236401 A1 beschrieben.

Gemäß einer weiteren Ausführungsform wird die Position des Emitters in der Probe mit einem Maximum-Likelihood-Schätzer oder mit einem LMS (least mean square)-Schätzer geschätzt. Entsprechende Schätzverfahren sind z.B. in Balzarotti et al. (2017) Nanometer resolution imaging and tracking of fluorescent molecules with minimal photon fluxes, Science 355 (6325), 606-612 (Maximum-Likelihood-Schätzer) sowie R. Schmidt et al. (2021) MINFLUX nanometer-scale 3D imaging and microsecond-range tracking on a common fluorescence microscope, Nat. Commun. 12 (1), 1478 bzw. US 11,933,729 (LMS-Schätzer) beschrieben.

Gemäß einer weiteren Ausführungsform ist das Beleuchtungslicht Anregungslicht, das die Emitter in der Probe zur Emission von Photonen anregt. Nach dieser Ausführungsform ist das erfindungsgemäße Verfahren also ein MINFLUX-Verfahren, bei dem die Probe mit einer Intensitätsverteilung von Anregungslicht mit einem lokalen Minimum (z.B. einem Anregungslicht-Donut oder einem Anregungslicht-Bottle-Beam) beleuchtet wird. Dies hat insbesondere den Vorteil einer besonders hohen Photoneneffizienz.

Gemäß einer weiteren Ausführungsform ist der Detektor ein Hybridfotodetektor. Ein Hybridfotodetektor ist eine Kombination aus einem Fotomultiplier und einer Avalanche-Fotodiode. Das auf den Detektor treffende Photon erzeugt zunächst ein Fotoelektron auf einer Fotokathode. Das Fotoelektron wird im Vakuum beschleunigt und trifft dann auf eine Avalanche-Fotodiode, wo es vervielfältigt wird. Solche Detektoren haben hinsichtlich des erfindungsgemäßen Verfahrens den Vorteil, dass sie im Gegensatz zu Detektoren auf Basis von Avalanche-Fotodioden (ohne Fotomultiplier) keine nennenswerte Totzeit aufweisen. Sie können daher die Photoneneffizienz eines Lokalisations- bzw. Verfolgungsverfahrens verbessern. Andererseits ergibt sich bei Hybridfotodetektoren das Problem, dass schnell aufeinander folgende Photonen nicht zeitlich aufgelöst werden, sondern einen einzigen Signalpuls ergeben können. Durch die erfindungsgemäße Analyse der Signalpulsform und die Gewichtung der Detektionsereignisse für die Positionsschätzung lassen sich Hybridfotodetektoren vorteilhafterweise trotzdem für ein Lokalisations- bzw. Verfolgungsverfahren von Emittern, insbesondere ein MINFLUX-Verfahren, nutzen.

Gemäß einer weiteren Ausführungsform umfasst der Detektor mindestens einen Fotomultiplier, insbesondere einen Mikrokanalplatten-Fotomultiplier (MCP-PMT).

Gemäß einer weiteren Ausführungsform werden die Gewichte auf Basis einer Breite der Signalpulsform und/oder einer Fläche der Signalpulsform bestimmt. Dabei kann eine größere Breite und/oder Fläche der Signalpulsform auf eine größere Anzahl von Photonen hinweisen, die dem entsprechenden Detektionsereignis zugrunde liegen. Insbesondere erfolgt die Bestimmung der Breite und/oder Fläche automatisch durch einen Datenanalysealgorithmus. Dabei kann optional auch künstliche Intelligenz, z.B. ein trainiertes neuronales Netz, verwendet werden.

Gemäß einer weiteren Ausführungsform wird durch die Analyse der Signalpulsform eine Anzahl von durch den Detektor erfassten Photonen ermittelt, die das jeweilige Detektionsereignis anzeigt. Dies kann beispielsweise durch Analyse der Breite und/oder Fläche der Signalpulsform erfolgen. Die Anzahl von Photonen beträgt in der Regel mindestens 1, kann aber auch Null betragen. Dies kann der Fall sein, wenn die Signalpulsform kein Detektionsereignis anzeigt, sondern z.B. auf Störsignale zurückzuführen ist.

Gemäß einer weiteren Ausführungsform wird die Analyse der Signalpulsform und die Zuordnung der Gewichte zu den Detektionsereignissen abhängig davon durchgeführt, ob eine erwartete Photonenrate einen vorgegebenen Grenzwert überschreitet. Bei niedrigen Photonenraten kann die Wahrscheinlichkeit, dass Detektionsereignisse durch mehrere, auf der Zeitachse überlappende Photonen hervorgerufen werden, so gering sein, dass die Analyse der Signalpulsform und die Zuordnung von Gewichten das Ergebnis der Lokalisation nicht wesentlich verbessert. In diesem Fall kann durch selektiven Verzicht auf die erfindungsgemäße Auswertung eine Verringerung der Rechenzeit erreicht werden.

Insbesondere bei iterativen MINFLUX-Verfahren verringert sich häufig die Photonenemissionsrate nach und nach während des Durchlaufens der Iterationen. Dies liegt daran, dass die tatsächliche Position des zu lokalisierenden oder zu verfolgenden Emitters mit immer höherer Genauigkeit bekannt ist. Daher können die Positionen des lokalen Minimums der Intensitätsverteilung des Beleuchtungslichts bzw. die Form und/oder Anordnung der Intensitätsverteilung des Beleuchtungslichts in den späteren Iterationen so gewählt werden, dass sie immer näher an der tatsächlichen Position des Emitters liegen. Dadurch ergibt sich sukzessive eine geringere Anregung und eine geringere Photonenrate. In diesem Verfahren kann also insbesondere der Grenzwert für das Durchführen der Analyse der Signalpulsform und die Zuordnung der Gewichte erreicht werden.

Die erwartete Photonenemissionsrate kann durch Messung ermittelt werden, beispielsweise kann sie aus den Signalen des Detektors laufend bestimmt werden, indem die Anzahl der erfassten Emissionen in einem vorgegebenen Zeitintervall bestimmt und durch das Zeitintervall geteilt wird. Diese Bestimmung kann z.B. in periodischen Zeitabständen durchgeführt werden. Wenn immer dasselbe Referenzzeitintervall herangezogen wird, kann selbstverständlich statt der erwarteten Photonenemissionsrate auch ein Grenzwert der erwarteten Photonenzahl als Kriterium verwendet werden, um zu bestimmen, ob unter den aktuellen Messbedingungen das erfindungsgemäße Verfahren verwendet wird.

Alternativ dazu kann die erwartete Photonenemissionsrate (oder Photonenzahl) auch geschätzt werden, z.B. auf Basis von aktuellen Messparametern, wie z.B. Beleuchtungsintensität oder Repetitionsrate eines Beleuchtungslaser (im Fall einer gepulsten Anregung), sowie ggf. auf Basis der Art der untersuchten Probe und der Art der in der Probe enthaltenen Emitter. Beispielsweise kann für bestimmte Schritte oder Iterationen eines MINFLUX-Verfahrens die erwartete Photonenemissionsrate vorbekannt sein und gespeichert sein. Dabei können die Schritte z.B. unterschiedliche Erstreckungen (z.B. Durchmesser) eines Beleuchtungsmusters, unterschiedliche Laserleistungen (und somit Gesamtintensitäten des Beleuchtungslichts) oder unterschiedliche Formen oder Ausrichtungen der Intensitätsverteilung des Beleuchtungslichts aufweisen.

Gemäß einer weiteren Ausführungsform wird die Position des Emitters mehrfach nacheinander in jeweiligen Iterationsschritten, insbesondere mit zunehmender Positionsgenauigkeit, geschätzt, wobei die Analyse der Signalpulsform und die Zuordnung der Gewichte zu den Detektionsereignissen in mindestens einem ersten Iterationsschritt durchgeführt wird, wobei die Positionsschätzung in mindestens einem zweiten Iterationsschritt, der nach dem mindestens einen ersten Iterationsschritt durchgeführt wird, auf Basis der ungewichteten Detektionsereignisse durchgeführt wird.

Gemäß einer weiteren Ausführungsform weist das Verfahren einen Vorlokalisierungsschritt auf, wobei die Probe in dem Vorlokalisierungsschritt mit Beleuchtungslicht beleuchtet wird und von dem Beleuchtungslicht induzierte oder modulierte Detektionsereignisse mit dem Detektor erfasst werden, wobei den in dem Vorlokalisierungsschritt erfassten Detektionsereignissen auf Basis der Analyse der Signalpulsform der Detektionsereignisse Gewichte zugeordnet werden, wobei auf Basis der gewichteten Detektionsereignisse eine Grobpositionsbestimmung des zu lokalisierenden oder zu verfolgenden Emitters erfolgt, und wobei anschließend die Intensitätsverteilung des Beleuchtungslichts auf Basis der Grobpositionsbestimmung in der Probe platziert wird.

Auf diese Weise kann die Photoneneffizienz bzw. Positionsgenauigkeit der Grobpositionsbestimmung verbessert werden.

Die Analyse der Signalpulsform und die Zuordnung der Gewichte auf Basis der Analyse kann insbesondere auch nur für den Vorlokalisierungsschritt und nicht in den anschließenden Lokalisations- / Verfolgungsschritten (insbesondere MINFLUX-Schritten) durchgeführt werden. Dies ist deshalb vorteilhaft, weil in einem Vorlokalisierungsschritt, in dem die Position des Emitters in der Probe noch nicht bekannt ist, tendenziell eine höhere Photonenrate auftritt als in den nachfolgenden Schritten (insbesondere bei einem MINFLUX-Verfahren), so dass in diesem Schritt vermehrt Detektionsereignisse auftreten, die auf mehrere Photonen zurückzuführen sind.

Bei dem Vorlokalisierungsschritt kann dieselbe Intensitätsverteilung des Beleuchtungslichts verwendet werden wie in den nachfolgenden Schritten des Verfahrens, es kann jedoch auch eine andere Intensitätsverteilung, insbesondere ein regulärer gaußförmiger Fokus oder eine homogene Beleuchtung eines Bildfeldes (Weitfeldbeleuchtung) verwendet werden. Das Beleuchtungslicht muss also in dem Vorlokalisierungsschritt keine Intensitätsverteilung mit einem lokalen Minimum aufweisen.

Eine Vorlokalisierung kann mit verschiedenen Methoden durchgeführt werden. Aus dem Stand der Technik sind z.B. die Aufnahme eines Weitfeldbildes, das Abtasten der Probe mit einem gaußförmigen Anregungsfokus sowie das sogenannte Pinhole Orbit Scanning (siehe US 2023/0251479 A1) bekannt. Wenn die entsprechende Bildaufnahme mit Detektoren durchgeführt wird, die Einzelphotonen erfassen können, und bei denen unterschiedliche Anzahlen von Photonen unterschiedliche Signalpulsformen erzeugen, kann das erfindungsgemäße Verfahren in all diesen Vorlokalisationsmethoden angewendet werden.

Ein zweiter Aspekt der Erfindung betrifft eine Vorrichtung zur Lokalisierung oder zum Verfolgen von Emittern in einer Probe, insbesondere nach dem ersten Aspekt der Erfindung, aufweisend eine Recheneinheit, die dazu ausgebildet ist, Signalpulsformen von mit einem Detektor registrierten Detektionsereignissen zu analysieren. Die Detektionsereignisse zeigen jeweils von einem Emitter in einer mit einer Intensitätsverteilung eines Beleuchtungslichts mit einem lokalen Minimum beleuchteten Probe emittiertes Photon oder mehrere in einer mit einer Intensitätsverteilung eines Beleuchtungslichts mit einem lokalen Minimum beleuchteten Probe emittierte Photonen an. Das Beleuchtungslicht regt den Emitter zur Emission der Photonen an oder moduliert die Emission von Photonen durch den Emitter. Die Recheneinheit ist dazu ausgebildet, den Detektionsereignissen auf Basis der Analyse der Signalpulsform des jeweiligen Detektionsereignisses Gewichte zuzuordnen und auf Basis der gewichteten Detektionsereignisse eine Position des Emitters in der Probe zu schätzen.

Ein dritter Aspekt der Erfindung betrifft ein Lichtmikroskop, insbesondere ein MINFLUX-Mikroskop, zur Lokalisierung oder zum Verfolgen von Emittern in einer Probe, aufweisend eine Beleuchtungsoptik, die dazu ausgebildet ist, eine Probe mit einer Intensitätsverteilung von Beleuchtungslicht mit einem lokalen Minimum zu beleuchten, wobei das Beleuchtungslicht Emitter in der Probe zur Emission von Photonen anregt oder die Emission von Photonen durch Emitter in der Probe moduliert, und einen Detektor, insbesondere einen Hybridfotodetektor, der dazu ausgebildet ist, Detektionsereignisse zu registrieren, wobei die Detektionsereignisse jeweils ein von einem Emitter in der Probe emittiertes Photon oder mehrere von einem Emitter in der Probe emittierte Photonen anzeigen. Das Lichtmikroskop weist weiterhin eine Vorrichtung zur Lokalisierung oder zum Verfolgen von Emittern in einer Probe nach dem oben beschriebenen zweiten Aspekt auf.

Ein vierter Aspekt der Erfindung betrifft ein Computerprogramm aufweisend Programmcode, der die Vorrichtung zur Lokalisierung oder zum Verfolgen von Emittern nach dem zweiten Aspekt und/oder das Lichtmikroskop nach dem dritten Aspekt dazu veranlasst, das Verfahren nach dem ersten Aspekt auszuführen.

Vorteilhafte Weiterbildungen der Erfindung ergeben sich aus den Patentansprüchen, der Beschreibung und den Zeichnungen und den zugehörigen Erläuterungen zu den Zeichnungen. Die beschriebenen Vorteile von Merkmalen und / oder Merkmalskombinationen der Erfindung sind lediglich beispielhaft und können alternativ oder kumulativ zur Wirkung kommen.

Hinsichtlich des Offenbarungsgehalts (aber nicht des Schutzbereichs) der ursprünglichen Anmeldungsunterlagen und des Patents gilt Folgendes: Weitere Merkmale sind den Zeichnungen - insbesondere den dargestellten relativen Anordnungen und Wirkverbindungen - zu entnehmen.

Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen, was aber nicht für die unabhängigen Patentansprüche des erteilten Patents gilt.

Die in den Patentansprüchen enthaltenen Bezugszeichen stellen keine Beschränkung des Umfangs der durch die Patentansprüche geschützten Gegenstände dar. Sie dienen lediglich dem Zweck, die Patentansprüche leichter verständlich zu machen.

Im Folgenden werden Ausführungsbeispiele der Erfindung anhand von Figuren beschrieben. Diese beschränken nicht den Gegenstand dieser Offenbarung und den Schutzumfang.

### Kurzbeschreibung der Figuren

- Fig. 1: zeigt schematisch ein Ausführungsbeispiel des erfindungsgemäßen Verfahrens;
- Fig. 2: zeigt ein erfindungsgemäßes Lichtmikroskop gemäß einem Ausführungsbeispiel;
- Fig. 3: zeigt eine Ausführungsform eines Lichtmodulators zur Verwendung in einem erfindungsgemäßen Lichtmikroskop;
- Fig. 4-7: zeigen beispielhafte Intensitätsverteilungen mit einem lokalen Minimum zur Verwendung in einem erfindungsgemäßen Verfahren.

### Beschreibung der Figuren

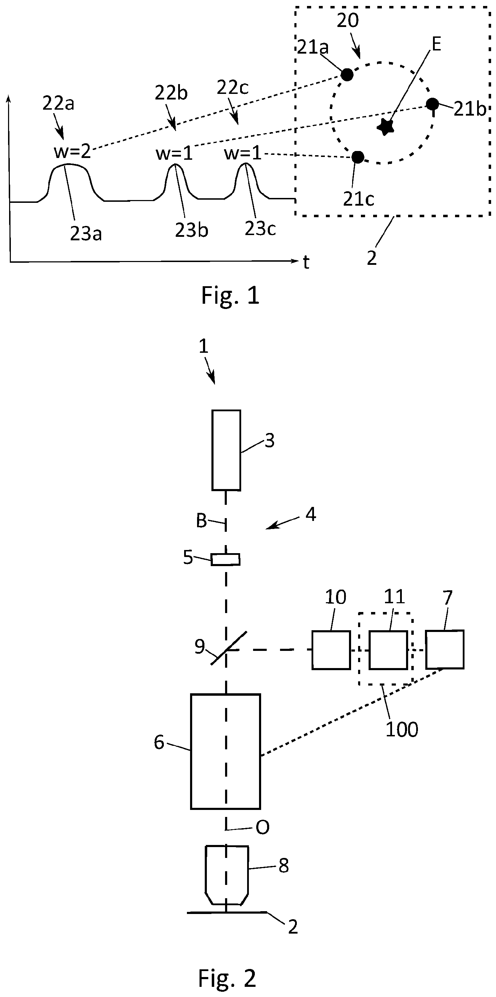

**Fig. 1** zeigt schematisch ein Ausführungsbeispiel des erfindungsgemäßen Verfahrens, insbesondere eines MINFLUX-Verfahrens, zur Lokalisierung oder zum Verfolgen von Emittern E in einer Probe 2. Die Probe 2 wird in einem Nahbereich einer vorab grob geschätzten Position eines vereinzelten Emitters E mit einer Intensitätsverteilung von Beleuchtungslicht (insbesondere Anregungslicht, das die Emitter in der Probe 2 zu Lichtemissionen, insbesondere Fluoreszenz, anregt) beleuchtet, wobei die Intensitätsverteilung ein lokales Minimum aufweist. Bei der Intensitätsverteilung kann es sich z.B. um einen sogenannten Donut oder einen sogenannten Bottle Beam handeln.

Das Minimum der Intensitätsverteilung wird insbesondere nacheinander an Positionen 21a,21b,21c in der Probe 2 verlagert, die ein Beleuchtungsmuster 20 um die vorab geschätzte Position bilden. In **Fig. 1** ist innerhalb des Beleuchtungsmusters 20 die tatsächliche Position des Emitters E markiert. Das Beleuchtungsmuster 20 umfasst drei symmetrisch auf einem Kreis verteilte Positionen 21a,21b,21c, wobei das Zentrum des Kreises an der zuvor (im ersten Schritt grob) geschätzten Position des Emitters E liegt.

Die Intensitätsverteilung kann z.B. schrittweise nacheinander an die drei Positionen 21a,21b,21c verlagert werden, z.B. mit schnellen Strahlscannern wie elektrooptischen oder akustooptischen Deflektoren. Zwischen solchen Sprüngen kann die Intensitätsverteilung insbesondere für eine gewisse Verweilzeit an der entsprechenden Position 21a,21b,21c stillstehen. Alternativ ist es auch möglich, die Intensitätsverteilung auf einer kontinuierlichen Bahn um die vorab geschätzte Position des Emitters zu bewegen, wobei auch Strahlscanner wie Galvoscanner oder resonante Scanner in Frage kommen. Im letztgenannten Fall können z.B. die einzelnen Detektionsereignisse 22a,22b,22c einen Zeitstempel haben und auf Basis des Zeitstempels kann die zugehörige Position der Intensitätsverteilung auf der Bahn ermittelt werden, beispielsweise auf Basis von Steuerdaten des Strahlscanners oder Messdaten eines Positionssensors, der z.B. eine aktuelle Position optischer Elemente (etwa Spiegel) des Strahlscanners messen kann. Alternativ kann auch ein zeitlich moduliertes Emissionssignal analysiert werden, um die Position des Emitters zu schätzen, z.B. durch Fourier-Analyse oder in der in US 2023/0008453 A1 beschriebenen Weise.

Für jede Position 21a,21b,21c werden Photonen des vereinzelten Emitters E von einem Detektor 10 (siehe **Fig. 2**) erfasst. Diese lösen Detektionsereignisse 22a,22b,22c an dem Detektor 10 aus, wobei die Detektionsereignisse 22a,22b,22c durch Auftreffen eines oder mehrerer Photonen auf der aktiven Fläche des Detektors 10 hervorgerufen werden können.

In **Fig. 1** ist weiterhin schematisch eine Zeitreihe von drei Signalpulsen des Detektors 10 gezeigt, welche jeweilige Detektionsereignisse 22a,22b,22c anzeigen. Die drei Detektionsereignisse 22a,22b,22c korrespondieren mit den drei beispielhaften Positionen 21a,21b,21c des Beleuchtungsmusters 20. Je nachdem, wie viele Photonen das entsprechende Detektionsereignis 22a,22b,22c ausgelöst haben, ergibt sich eine unterschiedliche Signalpulsform 23a,23b,23c. Der Signalpuls des Detektionsereignisses 22a ist z.B. breiter als die Signalpulse der Detektionsereignisse 22b und 22c, da das Detektionsereignis 22a auf das Auftreffen von zwei zeitlich überlappenden Photonen zurückzuführen ist, während die Detektionsereignisse 22b und 22c jeweils nur auf das Auftreffen eines Photons zurückzuführen sind. Dies ist dadurch zu erklären, dass die tatsächliche Position des Emitters E weiter von der Position 21a des lokalen Minimums der Intensitätsverteilung entfernt ist als von den Positionen 21b und 21c.

In realen Lokalisierungsexperimenten werden tendenziell für jede Position der Intensitätsverteilung eine Vielzahl von Photonen erfasst, typischerweise etwa hundert bis einige tausend Photonen. Das hier dargestellte einfache Beispiel, bei dem für jede Position nur ein einziges Detektionsereignis mit ein oder zwei Photonen vorliegt, soll nur zum Verständnis des erfindungsgemäßen Verfahrens beitragen, ist aber in keiner Weise beschränkend für den Schutzbereich der Ansprüche. Das erfindungsgemäße Prinzip lässt sich selbstverständlich auch auf eine wesentlich größere Anzahl von Detektionsereignissen übertragen. Für einzelne Detektionsereignisse liegt jedoch auch bei realen Lokalisierungsexperimenten die Anzahl von Photonen oft bei eins oder zwei, wobei auch höhere Werte (z.B. im Bereich von 3-10) möglich sind.

Erfindungsgemäß werden den Detektionsereignissen 22a,22b,22c auf Basis einer Analyse der Signalpulsform 23a,23b,23c Gewichte w zugeordnet. Im vorliegenden Beispiel wird dem Detektionsereignis 22a aufgrund der größeren Breite und/oder der größeren Fläche der Signalpulsform 23a das Gewicht 2 zugeordnet, den Detektionsereignissen 22b und 22c wird dagegen das Gewicht 1 zugeordnet. Dies korrespondiert hier mit den Photonenzahlen, welche die Detektionsereignisse 22a,22b,22c hervorgerufen haben, was vorteilhaft für die Positionsschätzung ist. Es ist allerdings auch möglich, dass die Gewichte nicht identisch mit den Photonenzahlen sind. Insbesondere stehen die Gewichte jedoch in einem durch eine Funktion bestimmten Verhältnis zu den Photonenzahlen. Eine weitere Möglichkeit ist für das vorliegende Beispiel (**Fig. 1**) das Gewicht 0,5 für das Detektionsereignis 22a und jeweils das Gewicht 0,25 für die Detektionsereignisse 22b und 22c. Diese Werte ergeben sich durch Teilen der Photonenzahlen (2,1,1) durch die Gesamtzahl der für alle drei Positionen 21a,21b,21c erfassten Photonen (4).

In Anlehnung an den in US 11,933,729 B2 beschriebenen LMS-Schätzer für ein MINFLUX-Verfahren ist ein Beispiel für einen erfindungsgemäßen unkalibrierten Positionsschätzer unter Verwendung gewichteter Detektionsereignisse die Vektorsumme $\vec{u} \left({d}_{j}, \vec{{b}_{j}}\right) = \frac{{\sum }_{j = 1}^{m} {w}_{j} {d}_{j} \vec{{b}_{j}}}{{\sum }_{j = 1}^{m} {w}_{j} {d}_{j}}$

**Dabei bezeichnet** *̅u̅*̅(*dⱼ, b̅ⱼ)* den Positionsschätzer, *dⱼ* das Detektionsereignis mit Index j, *b̅ⱼ* den Positionsvektor des Minimums der Intensitätsverteilung des Beleuchtungslichts mit dem Index j an der entsprechenden Position 21a,21b,21c, an der sich das Minimum zum Zeitpunkt der Erfassung des Detektionsereignisses 22a,22b,22c befunden hat, und *wⱼ* das entsprechende Gewicht mit dem Index j, das dem Detektionsereignis 22a,22b,22c erfindungsgemäß auf Basis der Analyse der Signalpulsform 23a,23b,23c zugeordnet wurde.

Dies führt dazu, dass in dem Schätzer statt der ungenauen Detektionsereignisse selbst Werte berücksichtigt werden, welche die tatsächlich erfassten Photonenzahlen besser widerspiegeln. Dies verbessert die Positionsschätzung und die Nutzung der Photonen.

In dem oben dargestellten stark vereinfachten Beispiel tritt für jede Beleuchtungsposition nur ein Detektionsereignis auf.

Für den realistischeren Fall mehrerer Detektionsereignisse für jede Beleuchtungsposition kann ein beispielhafter Positionsschätzer wie folgt lauten: $\vec{u} \left({d}_{ij}, {\vec{b}}_{j}\right) = \frac{{\sum }_{j = 1}^{m} \left({\sum }_{i}^{{n}_{j}} {w}_{ij} {d}_{ij}\right) {b}_{j}}{{\sum }_{j = 1}^{m} {\sum }_{i}^{{n}_{j}} {w}_{ij} {d}_{ij}}$

**Dabei bezeichnet** *̅u̅*̅(*dᵢⱼ, b̅ⱼ*) den Positionsschätzer, *b̅ⱼ* den Positionsvektor des Minimums der Intensitätsverteilung des Beleuchtungslichts mit dem Index j an der entsprechenden Position 21a,21b,21c, an der sich das Minimum zum Zeitpunkt der Erfassung des Detektionsereignisses 22a,22b,22c befunden hat, *dᵢⱼ* das i-te Detektionsereignis an der *j*-ten Beleuchtungsposition und *wᵢⱼ* das entsprechende Gewicht zu dem Detektionsereignis *dᵢⱼ*, das auf Basis der Analyse der Signalpulsform bestimmt wurde. *nⱼ* ist die Anzahl der Detektionsereignisse, die an der Beleuchtungsposition *bⱼ* erfasst wurden und m ist die Anzahl der Beleuchtungspositionen. Bezüglich der Vektorsumme der Beleuchtungspositionen *bⱼ* werden diese gemäß diesem Beispiel mit den Gewichten ${\sum }_{i}^{{n}_{j}} {w}_{ij} {d}_{ij}$ gewichtet.

Der oben beschriebene Schätzer kann insbesondere kalibriert werden, z.B. wie in US 11,933,729 B2 unter Verwendung einer Skalierungskonstante oder eines Kalibrierungspolynoms.

Das oben beschriebene Prinzip, statt den Einzelphotonen gewichtete Detektionsereignisse in dem Positionsschätzer zu berücksichtigen, lässt sich selbstverständlich auch auf andere Positionsschätzverfahren übertragen, beispielsweise auf den in F. Balzarotti et al. (2017) Nanometer resolution imaging and tracking of fluorescent molecules with minimal photon fluxes, Science 355 (6325), 606-612 beschriebenen Maximum-Likelihood-Schätzer, die in US 2023/0008453 A1 beschriebene Analyse der Lichtemissionsmodulation oder das in US 2024/0183783 A1 beschriebene Verfahren.

Selbstverständlich ist die Gewichtung der Detektionsereignisse auch auf ein Lokalisations- oder Verfolgungsverfahren anwendbar, bei dem die Intensitätsverteilung des Beleuchtungslicht nicht mit einem Strahlscanner in der Probe verlagert wird, sondern bei dem die Intensitätsverteilung verändert wird, so dass sich für unterschiedliche tatsächliche Positionen des Emitters unterschiedliche Lichtemissionen ergeben. Hierbei kann z.B. eine Lichtverteilung mit einem flächenförmigen Minimum und zwei gegenüberliegenden durch das flächenförmige Minimum getrennten Bereichen hoher Lichtintensität um den geometrischen Fokus gedreht werden, so dass die Bereiche hoher Lichtintensität entlang unterschiedlicher Richtungen in der Fokusebene liegen. Ein solches Verfahren ist z.B. in der US 2023/0236401 A1 beschrieben.

**Fig. 2** zeigt ein Ausführungsbeispiel eines erfindungsgemäßen Lichtmikroskops 1, insbesondere eines MINFLUX-Mikroskops, das zur Durchführung des erfindungsgemäßen Verfahrens eingerichtet ist und eine erfindungsgemäße Vorrichtung 100 zur Lokalisierung oder zum Verfolgen von Emittern E in einer Probe 2 aufweist. Das Lichtmikroskop 1 weist eine Lichtquelle 3, insbesondere einen Laser, auf, der Beleuchtungslicht B erzeugt. Das Beleuchtungslicht B wird von einem Lichtmodulator 5 phasen- oder amplitudenmoduliert und von einem Objektiv 8 in eine Probe 2 fokussiert, so dass sich in der Probe 2 eine Intensitätsverteilung mit einem lokalen Minimum, z.B. ein Donut oder ein Bottle Beam oder eine Überlagerung eines Donuts und eines Bottle Beams, ausbildet. Im Fall einer Phasenmodulation des Beleuchtungslichtstrahls kann der Lichtmodulator 5 z.B. in einer zur Rückapertur des Objektivs 8 konjugierten Pupillenebene oder nahe einer solchen Ebene stehen. Der Lichtmodulator 5 kann z.B. eine Phasenplatte oder ein Phasenfilter mit einem fest aufgeprägten Phasenmuster sein. Alternativ dazu kann der Lichtmodulator 5 auch ein Spatial Light Modulator mit Pixeln sein, deren optische Eigenschaften über elektrische oder optische Signale steuerbar sind. Eine aktive Fläche des Lichtmodulators 5 kann, wie in **Fig. 2** dargestellt, von dem Beleuchtungslichtstrahl durchquert, also transmittiert werden oder alternativ von der aktiven Fläche reflektiert oder gebrochen werden (im Fall eines Spatial Light Modulators z.B. durch Überlagerung eines Phasenmusters mit einem Blaze-Gitter). Der Lichtmodulator kann optional ein Hologramm auf seiner aktiven Fläche darstellen.

Zwischen dem Lichtmodulator 5 und dem Objektiv 8 sind ein Strahlteiler 9 zur Trennung des Beleuchtungslichts von aus der Probe stammenden Lichtemissionen von Emittern sowie eine Scanvorrichtung 6, z.B. ein Galvo-Scanner, vorgesehen, die den Beleuchtungslichtstrahl über die Probe 2 scannt. In dem in **Fig. 2** dargestellten Beispiel ist die Scanvorrichtung 6 zwischen dem Strahlteiler 9 und dem Objektiv 8 angeordnet, d.h. die aus der Probe 2 stammenden Lichtemissionen durchqueren die Scanvorrichtung 6 und das Emissionslicht wird von dieser entscannt. Alternativ kann die Scanvorrichtung 6 auch zwischen der Lichtquelle 3 und dem Strahlteiler 9 angeordnet sein (sog. Non-Descanned-Anordnung). Außerdem kann das Lichtmikroskop 1 optional zusätzlich zu der dargestellten Scanvorrichtung 6 eine weitere Scanvorrichtung aufweisen, die z.B. zwischen der Lichtquelle 3 und dem Lichtmodulator 5 oder zwischen dem Lichtmodulator 5 und dem Strahlteiler 9 angeordnet sein kann. Bei dieser zusätzlichen Scanvorrichtung kann es sich z.B. um eine schnelle Scanvorrichtung auf Basis von elektrooptischen Deflektoren oder akustooptischen Deflektoren handeln. Solche Scanvorrichtungen lassen sich vorteilhafterweise in MINFLUX-Verfahren einsetzen, um die Intensitätsverteilung des Beleuchtungslichts B schnell gegenüber der Probe 2 zu verlagern, wobei eine hohe Scangeschwindigkeit bei der Verfolgung eines einzelnen sich in der Probe 2 bewegenden Emitters E besonders wichtig ist. Durch die Scanvorrichtung 6, die dann insbesondere als Galvo-Scanner ausgebildet sein kann, lässt sich eine langsamere Grobpositionierung des Beleuchtungslichts B in der Probe 2 über ein großes Bildfeld erreichen. Außerdem kann die Scanvorrichtung 6 insbesondere in einem Vorlokalisierungsschritt zur groben Positionsbestimmung des Emitters E genutzt werden. Wenn jedoch wie in **Fig. 2** dargestellt nur eine Scanvorrichtung 6, z.B. ein Galvoscanner, vorgesehen ist, kann diese insbesondere auch für die MINFLUX-Lokalisierung verwendet werden, z.B. durch Abfahren einer kontinuierlichen Bahn (z.B. einer Kreisbahn in der Probe 2).

Insbesondere dann, wenn das erfindungsgemäße Verfahren als STED-MINFLUX-Verfahren ausgebildet ist, kann das Lichtmikroskop 1 zusätzlich zu der in **Fig. 2** gezeigten Konfiguration eine weitere Lichtquelle aufweisen, deren Licht (insbesondere Anregungslicht, wobei das Beleuchtungslicht STED-Licht ist) in bekannter Weise mit dem Beleuchtungslicht B kombiniert wird.

Insbesondere für ein 3D-Lokalisations- oder Verfolgungsverfahren kann weiterhin eine axiale Scanvorrichtung, z.B. ein verformbarer Spiegel oder eine, insbesondere elektrooptische, Linse mit variablem Fokus vorgesehen sein.

In der Probe 2 werden durch das Beleuchtungslicht B Lichtemissionen einzelner Emitter E induziert oder moduliert. Diese Lichtemissionen werden von dem Objektiv 8 gebündelt, von der Scanvorrichtung 6 entscannt und anschließend von dem Strahlteiler 9 in einen Detektionsstrahlengang reflektiert, in dem ein Detektor 10, insbesondere ein Hybridfotodetektor, angeordnet ist, der Detektionsereignisse 22a,22b,22c erfasst, die durch das Auftreffen einzelner Photonen oder jeweils mehrerer Photonen auf dem Detektor 10 hervorgerufen werden.

Vor dem Detektor 10 kann optional eine Lochblende angeordnet sein, um die Lichtemissionen konfokal zu detektieren (nicht gezeigt). Weiterhin kann das Emissionslicht in dem Detektionsstrahlengang durch optische Elemente wie Spiegel oder Prismen aufgespalten werden (z.B. spektral) und es können mehrere Detektoren 10 (insbesondere mit entsprechender spektraler Empfindlichkeit) vorgesehen sein.

Der in **Fig. 2** gezeigte Detektor 10 ist mit einer Recheneinheit 11 (insbesondere einem FPGA, ASIC oder Mikrocontroller oder einem herkömmlichen Computer) einer erfindungsgemäßen Vorrichtung 100 zur Lokalisierung oder zum Verfolgen von Emittern E in einer Probe 2 gekoppelt. Die Recheneinheit 11 ist dazu ausgebildet, eine Analyse von Signalpulsformen 23a,23b,23c des Detektors 10 durchzuführen, auf Basis der Analyse den Detektionsereignissen 22a,22b,22c Gewichte w zuzuordnen und auf Basis der gewichteten Detektionsereignisse 22a,22b,22c sowie auf Basis der zugehörigen Positionen der Intensitätsverteilung des Beleuchtungslichts B in der Probe 2 oder der Formen bzw. Ausrichtungen der Intensitätsverteilung die Position des Emitters E in 5 der Probe 2 zu schätzen.

Die Analyse der Signalpulsformen 23a,23b,23c, die Zuordnung der Gewichte w und die Positionsschätzung kann, muss aber nicht zwingend mit demselben Prozessor durchgeführt werden, d.h. die Recheneinheit 11 kann auch ein System miteinander verbundener (und ggf., etwa im Fall von Cloud Computing örtlich verteilter) Prozessoren sein.

Das Lichtmikroskop 1 weist weiterhin eine Steuereinheit 7 auf, die mit der Recheneinheit 11 verbunden ist oder eine Einheit mit dieser bildet, und dazu eingerichtet ist, zumindest eine Scanvorrichtung des Lichtmikroskops 1 (z.B. die Scanvorrichtung 6 oder die oben beschriebene weitere Scanvorrichtung, die z.B. elektrooptische oder akustooptische Deflektoren aufweisen kann) auf Basis der von der Recheneinheit 11 geschätzten Position zu steuern. Auf diese Weise kann z.B. ein iteratives MINFLUX-Verfahren umgesetzt werden, bei dem ein Beleuchtungsmuster 20 von Positionen 21a,21b,21c in einem Iterationsschritt um eine in einem vorhergehenden Iterationsschritt geschätzte Position des Emitters E angeordnet wird. Alternativ oder zusätzlich kann die Steuereinheit 7 z.B. auch den Lichtmodulator 5, die Lichtquelle 3 und/oder zusätzliche Schaltelemente ansteuern, um die Ausrichtung und/oder Form der Intensitätsverteilung des Beleuchtungslichts B zu verändern.

Aus den nacheinander geschätzten Positionen mehrerer Emitter E kann ein hochauflösendes Bild der Probe 2 berechnet werden. Alternativ kann aus den nacheinander geschätzten Positionen desselben sich in der Probe 2 bewegenden Emitters E eine Trajektorie des Emitters E mit hoher räumlicher und zeitlicher Auflösung ermittelt werden.

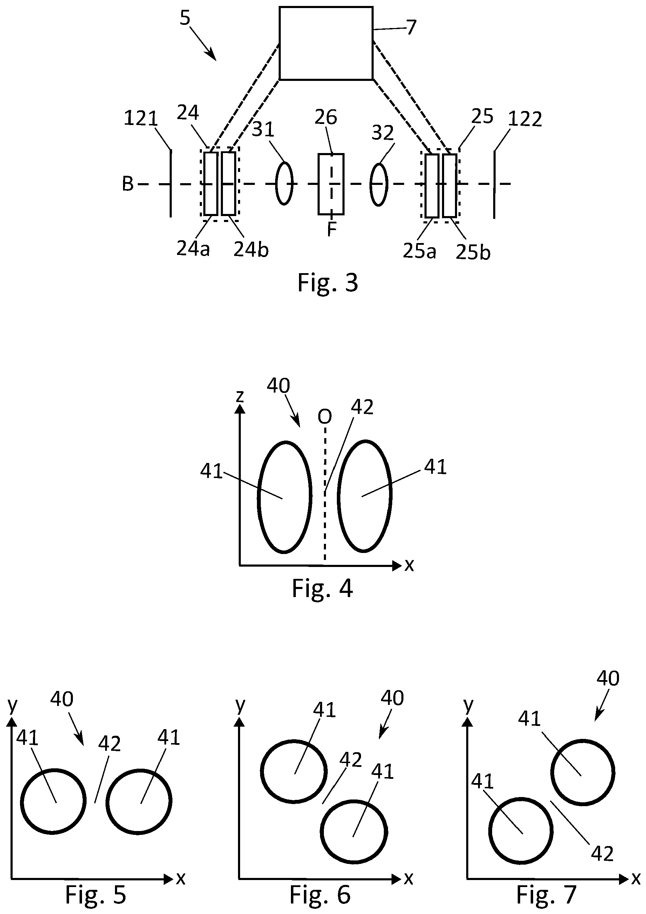

**Fig. 3** zeigt ein Ausführungsbeispiel eines Lichtmodulators 5, der z.B. anstelle eines SLM in dem in **Fig. 2** gezeigten Lichtmikroskop 1 verwendet werden kann, um ein Lokalisierungs- bzw. Verfolgungsverfahren umzusetzen, bei dem die Position des Emitters in der Probe 2 auf Basis der gewichteten Detektionsereignisse und den Detektionsereignissen zugeordneten Formen und/oder Ausrichtungen der Intensitätsverteilung geschätzt wird.

Die Scanvorrichtung 5 ist dabei für das eigentliche Lokalisierungs- bzw. Verfolgungsverfahren nicht notwendig, da bei dieser Ausführungsform des Verfahrens die Fokusposition des Beleuchtungslichtstrahls B in der Probe 2 stationär sein kann. Die Scanvorrichtung 5 kann jedoch z.B. zur Grobpositionierung und/oder für eine Vorlokalisierung genutzt werden.

Der Lichtmodulator 5 weist einen ersten (linearen) Polarisator 121, eine Polarisationsschalteinheit 24, eine erste Linse 31, einen biaxialen Kristall 26, eine zweite Linse 32, eine zweite Polarisationsschalteinheit 25 sowie einen zweiten (linearen) Polarisator 122 auf. Diese Komponenten werden in der genannten Reihenfolge von dem Beleuchtungslicht B durchquert. Der erste Polarisator 121 und der zweite Polarisator 122 haben zueinander orthogonale Polarisationsrichtungen. Die erste Polarisationsschalteinheit 24 weist einen ersten Polarisationsschalter 24a und einen zweiten Polarisationsschalter 24b auf und die zweite Polarisationsschalteinheit 25 weist einen dritten Polarisationsschalter 25a und einen vierten Polarisationsschalter 25b auf. Der erste Polarisationsschalter 24a und der zweite Polarisationsschalter 24b können jeweils z.B. als Pockels-Zellen ausgebildet sein, wobei die schnellen Achsen der Pockels-Zellen in einem Winkel von 45° zueinander angeordnet sind. Gleiches gilt für den dritten Polarisationsschalter 25a und den vierten Polarisationsschalter 25b. Die erste Linse 31 fokussiert den Beleuchtungslichtstrahl B auf den biaxialen Kristall 26 und die zweite Linse 32 kollimiert den von dem biaxialen Kristall 26 ausgehenden Beleuchtungslichtstrahl B.

Mit der ersten Polarisationsschalteinheit 24 kann durch Ansteuerung des ersten Polarisationsschalters 24a und/oder des zweiten Polarisationsschalters 24b mittels der Steuereinheit 7 die Eingangspolarisation eingestellt werden. Dementsprechend wird der Beleuchtungslichtstrahl B von dem biaxialen Kristall 26 durch konische Beugung geformt. Mit der zweiten Polarisationsschalteinheit 25 kann dann durch Ansteuerung des dritten Polarisationsschalters 25a und/oder des vierten Polarisationsschalters 25b mittels der Steuereinheit 7 die Ausgangspolarisation des Beleuchtungslichtstrahls B eingestellt werden.

Mit dem Lichtmodulator 5 kann durch Ansteuerung der Polarisationsschalter 24a,24b,25a,25b schnell zwischen verschiedenen Intensitätsverteilungen umgeschaltet werden, z.B. zwischen Lichtverteilungen mit zwei Intensitätsmaxima, die durch ein entlang einer Fläche erstrecktes Minimum voneinander getrennt sind (siehe **Fig. 4** bis **Fig. 7**), wobei z.B. zwischen verschiedenen Lagen der Fläche minimaler Intensität (insbesondere Drehwinkeln um die optische Achse des Objektivs) umgeschaltet werden kann. Dies kann bei einem Lokalisierungs- bzw. Verfolgungsverfahren das Verlagern eines punktförmigen Intensitätsminimums ersetzen, es kann also statt der Verlagerung des Fokus mit einem Strahlscanner die Form bzw. Ausrichtung der Intensitätsverteilung umgeschaltet werden.

Eine bei dem Verfahren auftretende Mehrdeutigkeit der Lokalisation einzelner Emitter kann z.B. wie in US 2023/0236401 A1 beschrieben durch Beleuchtung mit einer weiteren Lichtverteilung und Erfassung von Lichtemissionen aufgelöst werden, so dass die Positionen einzelner Emitter eindeutig bestimmbar sind.

**Fig. 4** bis **Fig. 7** zeigen schematisch eine Intensitätsverteilung 40 von Beleuchtungslicht B, die sich z.B. mit dem in **Fig. 3** gezeigten Lichtmodulator 5 oder z.B. auch mit einem Flüssigkristall-SLM erzeugen und in dem erfindungsgemäßen Lokalisierungs- bzw. Verfolgungsverfahren nutzen lässt.

**Fig. 4** ist eine Schnittdarstellung der Intensitätsverteilung 40 in einer xz-Ebene, wobei die z-Koordinate entlang der optischen Achse O des Objektivs eines Lichtmikroskops verläuft, an dessen Fokus in der Probe 2 die Intensitätsverteilung 40 gebildet wird, und die x-Koordinate senkrecht zu der optischen Achse O ist. **Fig. 5** zeigt eine Schnittdarstellung derselben Intensitätsverteilung in der xy-Ebene senkrecht zu der optischen Achse O.

Aus **Fig. 4** und **Fig. 5** ist ersichtlich, dass die Intensitätsverteilung 40 zwei Bereiche 41 hoher Lichtintensität aufweist, die durch ein Minimum 42, insbesondere eine Nullstelle, voneinander getrennt sind, wobei das Minimum 42 flächig ausgebildet ist und durch die optische Achse O verläuft. Derartige Intensitätsverteilungen 40 werden teilweise im Stand der Technik als Halbmond-Lichtverteilungen bezeichnet und können z.B. durch eine Phasenmodulation des Beleuchtungslichtstrahls B über den Strahlquerschnitt mit einem Phasenmuster erzeugt werden, das durch zwei gleich große Bereiche mit einem Phasenunterschied von π gekennzeichnet ist, wobei der Phasensprung entlang einer Linie verläuft, und wobei die Phasenmodulation beispielsweise mit einer Phasenplatte oder einem SLM durchgeführt werden kann.

Alternativ kann die Intensitätsverteilung 40 z.B. auch mit dem in **Fig. 3** gezeigten Lichtmodulator 5 erzeugt werden, indem entsprechende Polarisationszustände mit der ersten Polarisationsschalteinheit 24 und der zweiten Polarisationsschalteinheit 25 eingestellt werden.

**Fig. 6** und **Fig. 7** zeigen in einer Schnittdarstellung in der xy-Ebene zwei Zustände der Intensitätsverteilung 40, in denen diese jeweils im Vergleich zu dem in **Fig. 5** gezeigten Zustand um +120° bzw. -120° um die optische Achse O gedreht ist.

Eine solche Drehung kann ebenfalls mit dem in **Fig. 3** dargestellten Lichtmodulator 5 durchgeführt werden, indem entsprechende Polarisationszustände durch Ansteuerung der ersten Polarisationsschalteinheit 24 und der zweiten Polarisationsschalteinheit 25 eingestellt werden.

Bei einem Lokalisierungs- und Verfolgungsverfahren kann die Probe 2 z.B. an einer festen Position in einem Nahbereich eines einzelnen Emitters nacheinander mit den in **Fig. 5** bis **Fig. 7** dargestellten Intensitätsverteilungen 40 beleuchtet werden und es können für die drei unterschiedlichen Orientierungen der Intensitätsverteilung (**Fig. 5** bis **Fig. 7**) separat Lichtemissionen aus der Probe 2 detektiert werden. Aus diesen Lichtemissionen und den entsprechenden Positionen kann dann mit einem Positionsschätzer die Position des einzelnen Emitters geschätzt werden, bei Bedarf unter Nutzung von Lichtemissionsdaten aus einer zusätzlichen Belichtung mit einer weiteren Intensitätsverteilung, z.B. einer Intensitätsverteilung mit einem zentralen Maximum, um eine etwaige Mehrdeutigkeit der Lokalisation aufzulösen.

### Bezugszeichenliste

- 1: Lichtmikroskop
- 2: Probe
- 3: Lichtquelle
- 4: Beleuchtungsoptik
- 5: Lichtmodulator
- 6: Scanvorrichtung
- 7: Steuereinheit
- 8: Objektiv
- 9: Strahlteiler
- 10: Detektor
- 11: Recheneinheit
- 20: Beleuchtungsmuster
- 21a,21b,21c: Position
- 22a,22b,22c: Detektionsereignis
- 23a,23b,23c: Signalpulsform
- 24: Erste Polarisationsschalteinheit
- 24a: Erster Polarisationsschalter
- 24b: Zweiter Polarisationsschalter
- 25: Zweite Polarisationsschalteinheit
- 25a: Dritter Polarisationsschalter
- 25b: Vierter Polarisationsschalter
- 26: Biaxialer Kristall
- 31: Erste Linse
- 32: Zweite Linse
- 40: Intensitätsverteilung
- 41: Bereich hoher Lichtintensität
- 42: Minimum
- 100: Vorrichtung zur Lokalisierung oder zum Verfolgen von Emittern
- 121: Erster Polarisator
- 122: Zweiter Polarisator
- B: Beleuchtungslicht/Beleuchtungslichtstrahl
- E: Emitter
- F: Fokusebene
- O: Optische Achse
- w: Gewicht

## Patentansprüche

1. Verfahren zur Lokalisierung oder zum Verfolgen von Emittern (E) in einer Probe (2), wobei die Probe (2) mit einer Intensitätsverteilung eines Beleuchtungslichts (B) mit einem lokalen Minimum beleuchtet wird, wobei das Beleuchtungslicht (B) Emitter (E) in der Probe (2) zur Emission von Photonen anregt oder die Emission von Photonen durch Emitter (E) in der Probe (2) moduliert,
**dadurch gekennzeichnet,**
**dass** mit einem Detektor (10) Detektionsereignisse (22a,22b,22c) registriert werden, wobei die Detektionsereignisse (22a,22b,22c) jeweils ein von einem Emitter (E) in der Probe (2) emittiertes Photon oder mehrere von einem Emitter (E) in der Probe (2) emittierte Photonen anzeigen, wobei den Detektionsereignissen (22a,22b,22c) auf Basis einer Analyse einer Signalpulsform (23a,23b,23c) des jeweiligen Detektionsereignisses (22a,22b,22c), die ein zeitlicher Verlauf einer Signalintensität eines Signalpulses des Detektors, der aufgrund der Erfassung eines oder mehrerer Photonen von dem Detektor entsteht, ist, Gewichte (w) zugeordnet werden, und wobei auf Basis der gewichteten Detektionsereignisse (22a,22b,22c) eine Position des Emitters (E) in der Probe (2) geschätzt wird.

2. Verfahren nach Anspruch 1, **dadurch gekennzeichnet, dass** die Position des Emitters (E) in der Probe (2) auf Basis der gewichteten Detektionsereignisse (22a,22b,22c) und den Detektionsereignissen (22a,22b,22c) zugeordneten Positionen (21a,21b,21c) des Minimums der Intensitätsverteilung geschätzt wird.

3. Verfahren nach Anspruch 1, **dadurch gekennzeichnet, dass** die Position des Emitters (E) in der Probe (2) auf Basis der gewichteten Detektionsereignisse (22a,22b,22c) und den Detektionsereignissen (22a,22b,22c) zugeordneten Formen und/oder Ausrichtungen der Intensitätsverteilung geschätzt wird.

4. Verfahren nach einem der vorhergehenden Ansprüche, **dadurch gekennzeichnet, dass** die Position des Emitters (E) in der Probe (2) mit einem Maximum-Likelihood-Schätzer oder mit einem LMS-Schätzer geschätzt wird.

5. Verfahren nach einem der vorhergehenden Ansprüche, **dadurch gekennzeichnet, dass** das Beleuchtungslicht (B) Anregungslicht ist, das die Emitter (E) in der Probe (E) zur Emission von Photonen anregt.

6. Verfahren nach einem der Ansprüche 1 bis 5, **dadurch gekennzeichnet, dass** der Detektor (10) ein Hybridfotodetektor ist.

7. Verfahren nach einem der Ansprüche 1 bis 5, **dadurch gekennzeichnet, dass** der Detektor (10) mindestens einen Fotomultiplier umfasst.

8. Verfahren nach einem der vorhergehenden Ansprüche, **dadurch gekennzeichnet, dass** die Gewichte (w) auf Basis einer Breite der Signalpulsform (23a,23b,23c) oder einer Fläche der Signalpulsform (23a,23b,23c) bestimmt werden.

9. Verfahren nach einem der vorhergehenden Ansprüche, **dadurch gekennzeichnet, dass** durch die Analyse der Signalpulsform (23a,23b,23c) eine Anzahl von durch den Detektor (10) erfassten Photonen ermittelt wird, die das jeweilige Detektionsereignis (22a,22b,22c) anzeigt.

10. Verfahren nach einem der vorhergehenden Ansprüche, **dadurch gekennzeichnet, dass** die Analyse der Signalpulsform (23a,23b,23c) und die Zuordnung der Gewichte (w) zu den Detektionsereignissen (22a,22b,22c) abhängig davon durchgeführt wird, ob eine erwartete Photonenrate einen vorgegebenen Grenzwert überschreitet.

11. Verfahren nach einem der vorhergehenden Ansprüche, **dadurch gekennzeichnet, dass** die Position des Emitters (E) mehrfach nacheinander in jeweiligen Iterationsschritten, insbesondere mit zunehmender Positionsgenauigkeit, geschätzt wird, wobei die Analyse der Signalpulsform (23a,23b,23c) und die Zuordnung der Gewichte (w) zu den Detektionsereignissen (22a,22b,22c) in mindestens einem ersten Iterationsschritt durchgeführt wird, wobei die Positionsschätzung in mindestens einem zweiten Iterationsschritt, der nach dem mindestens einen ersten Iterationsschritt durchgeführt wird, auf Basis der ungewichteten Detektionsereignisse (22a,22b,22c) durchgeführt wird.

12. Verfahren nach einem der vorhergehenden Ansprüche, **dadurch gekennzeichnet, dass** das Verfahren einen Vorlokalisierungsschritt aufweist, wobei die Probe (2) in dem Vorlokalisierungsschritt mit Beleuchtungslicht (B) beleuchtet wird und von dem Beleuchtungslicht (B) induzierte oder modulierte Detektionsereignisse (22a,22b,22c) mit dem Detektor (10) erfasst werden, wobei den in dem Vorlokalisierungsschritt erfassten Detektionsereignissen (10) auf Basis der Analyse der Signalpulsform (23a,23b,23c) der Detektionsereignisse (22a,22b,22c) Gewichte (w) zugeordnet werden, wobei auf Basis der gewichteten Detektionsereignisse (22a,22b,22c) eine Grobpositionsbestimmung des zu lokalisierenden oder zu verfolgenden Emitters (E) erfolgt, und wobei anschließend die Intensitätsverteilung des Beleuchtungslichts (B) auf Basis der Grobpositionsbestimmung in der Probe (2) platziert wird.

13. Vorrichtung (100) zur Lokalisierung oder zum Verfolgen von Emittern (E) in einer Probe (2), aufweisend eine Recheneinheit (11), die dazu ausgebildet ist, Signalpulsformen (23a,23b,23c) von mit einem Detektor (10) registrierten Detektionsereignissen (22a,22b,22c) zu analysieren, wobei die Detektionsereignisse (22a,22b,22c) jeweils von einem Emitter (E) in einer mit einer Intensitätsverteilung eines Beleuchtungslichts (B) mit einem lokalen Minimum beleuchteten Probe (2) emittiertes Photon oder mehrere von einem Emitter (E) in der Probe (2) emittierte Photonen anzeigen, wobei das Beleuchtungslicht (B) den Emitter (E) zur Emission der Photonen anregt oder die Emission von Photonen durch den Emitter (E) moduliert, wobei die Recheneinheit (11) dazu ausgebildet ist, den Detektionsereignissen (22a,22b,22c) auf Basis der Analyse der Signalpulsform (23a,23b,23c) des jeweiligen Detektionsereignisses (22a,22b,22c), die ein zeitlicher Verlauf einer Signalintensität eines Signalpulses des Detektors, der aufgrund der Erfassung eines oder mehrerer Photonen von dem Detektor entsteht, ist, Gewichte (w) zuzuordnen und auf Basis der gewichteten Detektionsereignisse (22a,22b,22c) eine Position des Emitters (E) in der Probe (2) zu schätzen.

14. Lichtmikroskop (1) zur Lokalisierung oder zum Verfolgen von Emittern (E) in einer Probe (2), aufweisend
- eine Beleuchtungsoptik (4), die dazu ausgebildet ist, eine Probe (2) mit einer Intensitätsverteilung von Beleuchtungslicht (B) mit einem lokalen Minimum zu beleuchten, wobei das Beleuchtungslicht (B) Emitter (E) in der Probe (2) zur Emission von Photonen anregt oder die Emission von Photonen durch Emitter (E) in der Probe (2) moduliert,
- einen Detektor (10), insbesondere einen Hybridfotodetektor, der dazu ausgebildet ist, Detektionsereignisse (22a,22b,22c) zu registrieren, wobei die Detektionsereignisse (22a,22b,22c) jeweils ein von einem Emitter (E) in der Probe (2) emittiertes Photon oder mehrere von einem Emitter (E) in der Probe (2) emittierte Photonen anzeigen,
**dadurch gekennzeichnet,**
**dass** das Lichtmikroskop (1) eine Vorrichtung (100) zur Lokalisierung oder zum Verfolgen von Emittern (E) in einer Probe (2) nach Anspruch 13 aufweist.

15. Computerprogramm aufweisend Programmcode, der die Vorrichtung (100) zur Lokalisierung oder zum Verfolgen von Emittern (E) nach Anspruch 13 oder das Lichtmikroskop (1) nach Anspruch 14 dazu veranlasst, das Verfahren nach einem der Ansprüche 1 bis 12 auszuführen.

## Claims

1. A method for localising or tracking emitters (E) in a sample (2), wherein the sample (2) is illuminated with an intensity distribution of an illumination light (B) having a local minimum, wherein the illumination light (B) excites emitters (E) in the sample (2) to emit photons or modulates the emission of photons by emitters (E) in the sample (2),
**characterised in**
**that** detection events (22a, 22b, 22c) are recorded by a detector (10), wherein the detection events (22a, 22b, 22c) each indicate a photon emitted by an emitter (E) in the sample (2) or several photons emitted by an emitter (E) in the sample (2), whereby weights (w) are assigned to the detection events (22a, 22b, 22c) on the basis of an analysis of a signal pulse shape (23a, 23b, 23c) of the respective detection event (22a, 22b, 22c), which is a temporal profile of the signal intensity of a signal pulse from the detector arising from the detection of one or more photons by the detector, and wherein, on the basis of the weighted detection events (22a, 22b, 22c), a position of the emitter (E) within the sample (2) is estimated.

2. The method according to claim 1, **characterised in that** the position of the emitter (E) in the sample (2) is estimated on the basis of the weighted detection events (22a, 22b, 22c) and the positions (21a, 21b, 21c) of the minimum of the intensity distribution associated with the detection events (22a, 22b, 22c).

3. A method according to claim 1, **characterised in that** the position of the emitter (E) in the sample (2) is estimated on the basis of the weighted detection events (22a, 22b, 22c) and the shapes and/or orientations of the intensity distribution associated with the detection events (22a, 22b, 22c).

4. A method according to one of the preceding claims, **characterised in that** the position of the emitter (E) in the sample (2) is estimated using a maximum likelihood estimator or an LMS estimator.

5. A method according to any one of the preceding claims, **characterised in that** the illumination light (B) is excitation light which excites the emitters (E) in the sample (2) to emit photons.

6. A method according to any one of claims 1 to 5, **characterised in that** the detector (10) is a hybrid photodetector.

7. A method according to any one of claims 1 to 5, **characterised in that** the detector (10) comprises at least one photomultiplier.

8. A method according to one of the preceding claims, **characterised in that** the weights (w) are determined on the basis of a width of the signal pulse shape (23a, 23b, 23c) or an area of the signal pulse shape (23a, 23b, 23c).

9. A method according to any one of the preceding claims, **characterised in that** the analysis of the signal pulse shape (23a, 23b, 23c) determines a number of photons detected by the detector (10), the number being indicated by the respective detection event (22a, 22b, 22c).

10. A method according to one of the preceding claims, **characterised in that** the analysis of the signal pulse shape (23a, 23b, 23c) and the assignment of weights (w) to the detection events (22a, 22b, 22c) are carried out depending on whether an expected photon rate exceeds a predetermined threshold value.

11. A method according to any one of the preceding claims, **characterised in that** the position of the emitter (E) is estimated repeatedly in succession in respective iterative steps, in particular with increasing positional accuracy, wherein the analysis of the signal pulse shape (23a, 23b, 23c) and the assignment of weights (w) to the detection events (22a, 22b, 22c) are carried out in at least one first iterative step, wherein the position estimation is carried out in at least one second iterative step, which is performed after the at least one first iterative step, on the basis of the unweighted detection events (22a, 22b, 22c).

12. A method according to one of the preceding claims, **characterised in that** the method comprises a pre-localisation step, wherein, in the pre-localisation step, the sample (2) is illuminated with illumination light (B) and detection events (22a, 22b, 22c) induced or modulated by the illumination light (B) are detected by the detector (10), wherein weights (w) are assigned to the detection events (22a, 22b, 22c) detected in the pre-localisation step on the basis of an analysis of the signal pulse shape (23a, 23b, 23c) of the detection events (22a, 22b, 22c), whereby a coarse position determination of the emitter (E) to be localised or tracked is carried out on the basis of the weighted detection events (22a, 22b, 22c), and whereby the intensity distribution of the illumination light (B) is subsequently positioned within the sample (2) on the basis of the coarse position determination.

13. Apparatus (100) for localising or tracking emitters (E) in a sample (2), comprising a processing unit (11) configured to analyse signal pulse shapes (23a, 23b, 23c) of detection events (22a, 22b, 22c) registered by a detector (10), wherein the detection events (22a, 22b, 22c) each indicate a photon emitted by an emitter (E) in a sample (2) illuminated by an illumination light (B) having an intensity distribution with a local minimum, or several photons emitted by an emitter (E) in the sample (2), wherein the illumination light (B) excites the emitter (E) to emit the photons or modulates the emission of photons by the emitter (E), wherein the processing unit (11) is configured to assign weights (w) to the detection events (22a, 22b, 22c) on the basis of the analysis of the signal pulse shape (23a, 23b, 23c) of the respective detection event (22a, 22b, 22c), which is a temporal profile of the signal intensity of a signal pulse from the detector arising from the detection of one or more photons by the detector, and to estimate a position of the emitter (E) in the sample (2) on the basis of the weighted detection events (22a, 22b, 22c).

14. A light microscope (1) for localising or tracking emitters (E) in a sample (2), comprising
- an illumination optical system (4) designed to illuminate a sample (2) with an intensity distribution of illumination light (B) having a local minimum, wherein the illumination light (B) excites emitters (E) in the sample (2) to emit photons or modulates the emission of photons by emitters (E) in the sample (2),
- a detector (10), in particular a hybrid photodetector, which is designed to register detection events (22a, 22b, 22c), wherein the detection events (22a, 22b, 22c) each indicate a photon emitted by an emitter (E) in the sample (2) or several photons emitted by an emitter (E) in the sample (2),
**characterised in**
**that** the light microscope (1) comprises an apparatus (100) for localising or tracking emitters (E) in a sample (2) as defined in claim 13.

15. A computer program comprising program code which causes the apparatus (100) for localising or tracking emitters (E) according to claim 13 or the light microscope (1) according to claim 14 to carry out the method according to any one of claims 1 to 12.

## Revendications

1. Procédé de localisation ou de suivi d'émetteurs (E) dans un échantillon (2), dans lequel l'échantillon (2) est éclairé par une lumière d'éclairage (B) présentant une distribution d'intensité comportant un minimum local, la lumière d'éclairage (B) excitant les émetteurs (E) dans l'échantillon (2) pour qu'ils émettent des photons ou modulant l'émission de photons par les émetteurs (E) dans l'échantillon (2),
**caractérisé en ce**
**qu'**un détecteur (10) enregistre des événements de détection (22a, 22b, 22c), chacun des événements de détection (22a, 22b, 22c) indiquant un photon émis par un émetteur (E) dans l'échantillon (2) ou plusieurs photons émis par un émetteur (E) dans l'échantillon (2), aux événements de détection (22a, 22b, 22c) étant attribués des poids (w) sur la base d'une analyse d'une forme d'impulsion de signal (23a, 23b, 23c) de l'événement de détection respectif (22a, 22b, 22c), qui correspond à l'évolution dans le temps de l'intensité d'une impulsion de signal du détecteur résultant de la détection d'un ou de plusieurs photons par le détecteur, et dans lequel une position de l'émetteur (E) dans l'échantillon (2) est estimée sur la base des événements de détection pondérés (22a, 22b, 22c).

2. Procédé selon la revendication 1, **caractérisé en ce que** la position de l'émetteur (E) dans l'échantillon (2) est estimée sur la base des événements de détection pondérés (22a, 22b, 22c) et des positions (21a, 21b, 21c) du minimum de la distribution d'intensité associées aux événements de détection (22a, 22b, 22c).

3. Procédé selon la revendication 1, **caractérisé en ce que** la position de l'émetteur (E) dans l'échantillon (2) est estimée sur la base des événements de détection pondérés (22a, 22b, 22c) et des formes et/ou orientations de la distribution d'intensité associées aux événements de détection (22a, 22b, 22c).

4. Procédé selon l'une des revendications précédentes, **caractérisé en ce que** la position de l'émetteur (E) dans l'échantillon (2) est estimée à l'aide d'un estimateur du maximum de vraisemblance ou d'un estimateur LMS.

5. Procédé selon l'une des revendications précédentes, **caractérisé en ce que** la lumière d'éclairage (B) est une lumière d'excitation qui excite les émetteurs (E) dans l'échantillon (2) afin qu'ils émettent des photons.

6. Procédé selon l'une des revendications 1 à 5, **caractérisé en ce que** le détecteur (10) est un photodétecteur hybride.

7. Procédé selon l'une des revendications 1 à 5, **caractérisé en ce que** le détecteur (10) comprend au moins un photomultiplicateur.

8. Procédé selon l'une des revendications précédentes, **caractérisé en ce que** les poids (w) sont déterminés sur la base d'une largeur de la forme d'impulsion du signal (23a, 23b, 23c) ou d'une aire de la forme d'impulsion du signal (23a, 23b, 23c).

9. Procédé selon l'une des revendications précédentes, **caractérisé en ce que** l'analyse de la forme d'impulsion du signal (23a, 23b, 23c) permet de déterminer un nombre de photons détectés par le détecteur (10), ce nombre étant indiqué par l'événement de détection correspondant (22a, 22b, 22c).

10. Procédé selon l'une des revendications précédentes, **caractérisé en ce que** l'analyse de la forme d'impulsion du signal (23a, 23b, 23c) et l'attribution des poids (w) aux événements de détection (22a, 22b, 22c) sont effectuées en fonction du fait qu'un taux de photons attendu dépasse ou non une valeur limite prédéfinie.

11. Procédé selon l'une des revendications précédentes, **caractérisé en ce que** la position de l'émetteur (E) est estimée plusieurs fois successivement au cours d'étapes d'itération respectives, notamment avec une précision de position croissante, l'analyse de la forme d'impulsion du signal (23a, 23b, 23c) et l'attribution des poids (w) aux événements de détection (22a, 22b, 22c) étant effectuées au cours d'au moins une première étape d'itération, l'estimation de la position étant réalisée au cours d'au moins une deuxième étape d'itération, effectuée après ladite au moins une première étape d'itération, sur la base des événements de détection non pondérés (22a, 22b, 22c).

12. Procédé selon l'une des revendications précédentes, **caractérisé en ce que** le procédé comprend une étape de pré-localisation, au cours de laquelle l'échantillon (2) est éclairé par une lumière d'éclairage (B) et des événements de détection (22a, 22b, 22c) induits ou modulés par la lumière d'éclairage (B) sont détectés par le détecteur (10), des poids (w) étant attribués aux événements de détection (22a, 22b, 22c) détectés au cours de l'étape de pré-localisation sur la base de l'analyse de la forme d'impulsion du signal (23a, 23b, 23c) des événements de détection (22a, 22b, 22c), une détermination approximative de la position de l'émetteur (E) à localiser ou à suivre étant effectuée sur la base des événements de détection pondérés (22a, 22b, 22c), et la distribution d'intensité de la lumière d'éclairage (B) étant ensuite placée dans l'échantillon (2) sur la base de cette détermination approximative de la position.

13. Dispositif (100) destiné à localiser ou à suivre des émetteurs (E) dans un échantillon (2), comprenant une unité de calcul (11) conçue pour analyser des formes d'impulsions de signal (23a, 23b, 23c) issues d'événements de détection (22a, 22b, 22c) enregistrés par un détecteur (10), chacun des événements de détection (22a, 22b, 22c) indiquant un photon émis par un émetteur (E) dans un échantillon (2) éclairé selon une distribution d'intensité d'une lumière d'éclairage (B) présentant un minimum local, ou plusieurs photons émis par un émetteur (E) dans l'échantillon (2), la lumière d'éclairage (B) excitant l'émetteur (E) pour qu'il émette les photons ou modulant l'émission de photons par l'émetteur (E), l'unité de calcul (11) étant conçue pour attribuer des poids (w) aux événements de détection (22a, 22b, 22c) sur la base de l'analyse de la forme d'impulsion du signal (23a, 23b, 23c) de l'événement de détection respectif (22a, 22b, 22c), qui correspond à l'évolution temporelle de l'intensité d'une impulsion de signal du détecteur résultant de la détection d'un ou de plusieurs photons par le détecteur, et pour estimer, sur la base des événements de détection pondérés (22a, 22b, 22c), une position de l'émetteur (E) dans l'échantillon (2).

14. Microscope optique (1) destiné à la localisation ou au suivi d'émetteurs (E) dans un échantillon (2), comprenant
- un système optique d'éclairage (4) conçu pour éclairer un échantillon (2) avec une distribution d'intensité d'une lumière d'éclairage (B) présentant un minimum local, la lumière d'éclairage (B) excitant des émetteurs (E) dans l'échantillon (2) afin qu'ils émettent des photons ou modulant l'émission de photons par des émetteurs (E) dans l'échantillon (2),
- un détecteur (10), en particulier un photodétecteur hybride, conçu pour enregistrer des événements de détection (22a, 22b, 22c), chacun des événements de détection (22a, 22b, 22c) indiquant un photon émis par un émetteur (E) dans l'échantillon (2) ou plusieurs photons émis par un émetteur (E) dans l'échantillon (2),
**caractérisé en ce**
**que** le microscope optique (1) comporte un dispositif (100) destiné à la localisation ou au suivi d'émetteurs (E) dans un échantillon (2) selon la revendication 13.

15. Programme informatique comprenant un code de programme qui amène le dispositif (100) de localisation ou de suivi d'émetteurs (E) selon la revendication 13 ou le microscope optique (1) selon la revendication 14 à exécuter le procédé selon l'une des revendications 1 à 12.
